# FASCICULE DE BREVET EUROPEEN

(11) **EP 2 677 655 B1**
(45) Date de publication et mention de la délivrance du brevet: **06.05.2015**
(21) Numéro de dépôt: 13164624.2
(22) Date de dépôt: 22.04.2013
(51) Int. Cl.: H02M 7/5387, H02M 1/32

(54) **Système de commande sécurisée d'une charge électrique**
Gesichertes Steuerungssystem einer elektrischen Ladung
Secure control system for an electric load

(30) Priorité: 23.05.2012 FR 1254675
(43) Date de publication de la demande: 25.12.2013
(73) Titulaire: Schneider Toshiba Inverter Europe SAS, 27120 Pacy sur Eure (FR)
(72) Inventeur: Le Goualec, Philippe, 27200 Vernon (FR); Ruault, Patrice, 78450 Villepreux (FR)
(74) Mandataire: Bié, Nicolas

(56) Documents cités:
- DE-A1-102009 046 583
- GB-A- 2 404 100

## Description

### Domaine technique de l'invention

La présente invention se rapporte à un système de commande sécurisée d'une charge électrique.

### Etat de la technique

La norme IEC61508 associe des fonctions de sécurité fonctionnelle à un niveau de probabilité de défaillance des éléments constituant une fonction dans un appareil. Ce niveau de probabilité, appelé SIL, varie de 1 à 4, le niveau 1 étant le moins exigeant et le niveau 4 le plus contraignant.

Aujourd'hui, la problématique de sécurité fonctionnelle s'applique à tous les domaines, notamment au contrôle-commande d'une charge électrique, assuré par un convertisseur de puissance de type variateur de vitesse. Ainsi, afin de satisfaire les exigences du niveau SIL dans un convertisseur de puissance, il est nécessaire de mettre en oeuvre des dispositifs de redondance sur les différents circuits du convertisseur.

Dans les convertisseurs de puissance actuels, il est connu de réaliser une surveillance de la vitesse en utilisant différentes architectures de redondance sur l'estimation et/ou le traitement réalisé, employant par exemple deux microprocesseurs en parallèle.

Le but de l'invention est de proposer un convertisseur de puissance intégrant des fonctions de sécurité fonctionnelle sur la vitesse, permettant d'obtenir un niveau de SIL d'au moins 2, sans employer deux microprocesseurs et en tirant avantage de l'architecture produit.

Le document DE 10 2009 046 583 A1 montre un système de commande securisée correspondant au préambule de la revendication 1.

### Exposé de l'invention

Ce but est atteint par un système de commande sécurisée comportant un convertisseur de puissance doté d'un module onduleur destiné à être connecté à une charge électrique et une unité de commande destinée à déterminer des signaux de commande à appliquer au module onduleur pour commander la charge électrique, l'unité de commande comportant
- une unité électronique de traitement qui comprend :
   - un premier circuit électronique de traitement agencé pour déterminer un signal de courant d'alimentation de la charge électrique,
   - un deuxième circuit électronique de traitement agencé pour déterminer un signal de tension appliqué à la charge électrique,
- une unité logicielle de traitement recevant lesdits signaux de courant et de tension en vue de déterminer lesdits signaux de commande de la charge électrique,
- le premier circuit électronique de traitement comportant des moyens d'estimation d'une valeur de pulsation ou de phase du courant à partir du signal de courant,
- le deuxième circuit électronique de traitement comportant des moyens d'estimation d'une valeur de pulsation ou de phase de la tension à partir du signal de tension,
- l'unité logicielle de traitement comporte un premier module logiciel d'estimation d'une valeur de pulsation ou d'une valeur de phase,
- l'unité électronique de traitement comporte une unité électronique de comparaison agencée pour comparer la valeur de pulsation ou de la phase estimée par le premier circuit électronique de traitement, la valeur de pulsation ou de phase estimée par le deuxième circuit électronique de traitement et la valeur de pulsation ou de phase estimée par le premier module logiciel de l'unité logicielle de traitement,
- l'unité électronique de comparaison comporte un premier canal d'inhibition du module onduleur du convertisseur de puissance.

Selon une particularité, l'unité logicielle de traitement comporte un deuxième module logiciel d'estimation d'une valeur de pulsation ou de phase du courant, tenant compte d'un signal de courant, ladite valeur de pulsation ou de phase étant injectée pour comparaison dans l'unité électronique de comparaison.

Selon une autre particularité, l'unité électronique de comparaison est agencée pour effectuer une comparaison en tenant compte de paramètres de sécurité fonctionnels de la charge électrique.

Selon une autre particularité, l'unité logicielle de traitement comporte une unité logicielle de comparaison recevant en entrée la valeur de pulsation ou de phase estimée par le premier circuit électronique de traitement, la valeur de pulsation ou de phase estimée par le premier module logiciel d'estimation et la valeur de pulsation ou de phase estimée par le deuxième module logiciel d'estimation.

Selon une autre particularité, l'unité logicielle de comparaison comporte un deuxième canal d'inhibition du module onduleur du convertisseur de puissance.

Selon une autre particularité, l'unité logicielle de traitement est agencée pour effectuer une comparaison en tenant compte de paramètres de sécurité fonctionnelle de la charge électrique.

### Brève description des figures

D'autres caractéristiques et avantages vont apparaître dans la description détaillée qui suit, faite en regard des dessins annexés dans lesquels :
- la figure 1 représente, de manière schématique, un convertisseur de puissance de type variateur de vitesse,
- la figure 2 représente l'architecture fonctionnelle classique d'un système de commande non sécurisée,
- la figure 3 représente une première architecture fonctionnelle du système de commande sécurisée de l'invention,
- la figure 4 représente une deuxième architecture fonctionnelle du système de commande sécurisée de l'invention,
- la figure 5 représente une troisième architecture fonctionnelle du système de commande sécurisée de l'invention,

### Description détaillée d'au moins un mode de réalisation

Dans la suite de la description, nous distinguerons des moyens ou unités électroniques composés d'éléments matériels ("hardware") et des moyens, modules ou unités logiciels composés de programmes informatiques ("software") exécutables par un microprocesseur.

L'invention concerne un système de commande sécurisée comportant un convertisseur de puissance 1 et une unité de commande 2. L'unité de commande 2 peut être intégrée au convertisseur de puissance ou être indépendante de celui-ci.

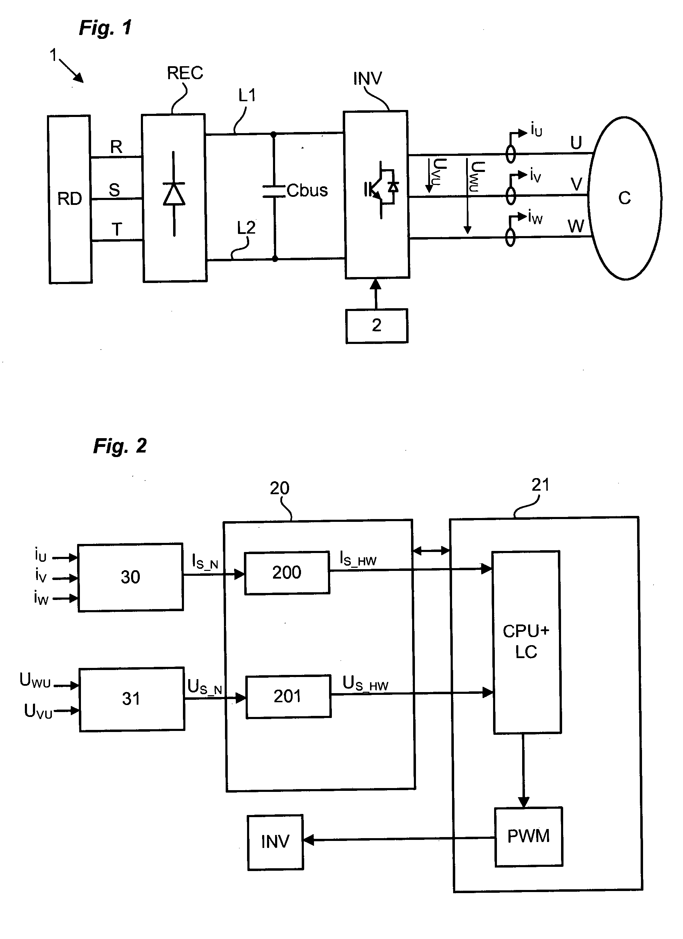

De manière connue, un convertisseur de puissance 1, de type variateur de vitesse, tel que représenté sur la figure 1, est destiné à la commande d'une charge électrique C. Il comporte notamment un module onduleur INV connecté par trois phases de sortie U, V, W à la charge électrique C et commandé par des signaux de commande générés par l'unité de commande 2 pour appliquer une tension variable à la charge électrique C.

Un convertisseur de puissance 1 de type variateur de vitesse comporte également :
- trois phases d'entrée R, S, T connectées à un réseau RD de distribution électrique,
- un module redresseur REC situé en entrée et destiné à convertir une tension alternative fournie par le réseau RD de distribution électrique en une tension continue,
- un bus continu d'alimentation connecté, en amont, au module redresseur REC et, en aval, au module onduleur INV et comportant deux lignes d'alimentation L1, L2 entre lesquelles la tension continue est appliquée,
- un condensateur de bus Cbus connecté aux deux lignes d'alimentation L1, L2 et chargé de maintenir la tension continue du bus à une valeur constante.

Le module onduleur INV d'un convertisseur de puissance 1 comporte plusieurs bras de commutation, par exemple au nombre de trois si la charge électrique C est triphasée. Chaque bras de commutation comporte deux transistors de puissance, par exemple de type IGBT, commandé chacun par un dispositif de commande recevant des signaux de commande de la part de l'unité de commande 2.

L'unité de commande 2 comporte une unité électronique de traitement 20 et une unité logicielle de traitement 21.

Dans une architecture classique telle que représentée sur la figure 2, l'unité électronique de traitement 20 est connectée à un premier circuit de mesure 30 d'au moins deux courants (i_{U}, i_{V}, i_{W}) sur les phases de sortie U, V, W connectées à la charge électrique C et à un deuxième circuit de mesure 31 des tensions simples ou composées (U_{VU}, U_{WU}) sur les phases de sortie U, V, W connectées à la charge électrique C. Les courants et tensions sont par exemple extraits sous forme de signaux numériques I_{S_N}, U_{S_N}, par exemple via un circuit de type sigma-delta. L'unité électronique de traitement 20 comporte ainsi :
- un premier circuit électronique de traitement 200 permettant de reconstituer les signaux de courant (I_{S_HW}) à partir du signal numérique de courant I_{S_N} obtenu par le premier circuit de mesure 30 et,
- un deuxième circuit électronique de traitement 201 permettant de reconstituer les signaux de tension (U_{S_HW}) à partir du signal numérique de tension U_{S_N} obtenu par le deuxième circuit de mesure 31.

L'unité logicielle de traitement 21 comporte une loi de commande LC recevant en entrée les signaux de courant et de tension obtenus et un microprocesseur CPU permettant d'exécuter la loi de commande en vue de déterminer les signaux de commande PWM à appliquer au module onduleur INV.

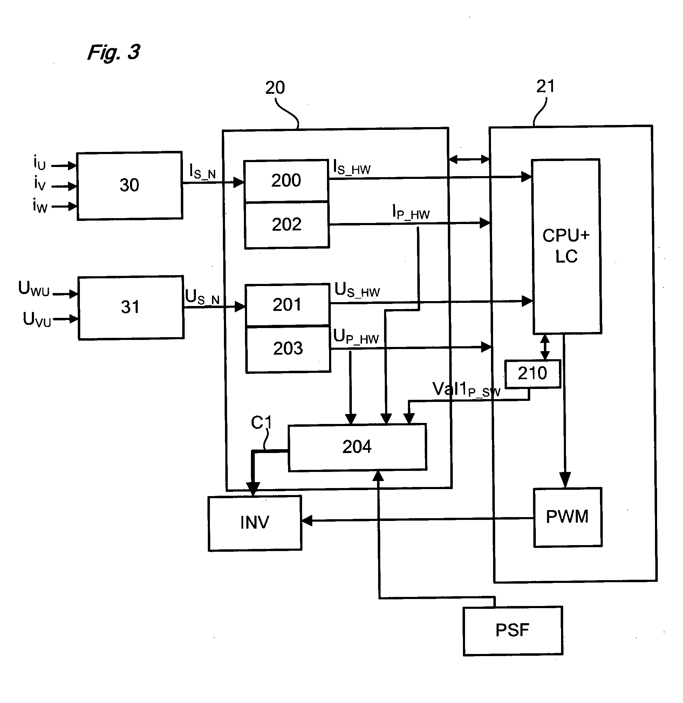

Selon l'invention, une première architecture du système de commande est représentée sur la figure 3.

Dans cette première architecture, le premier circuit électronique de traitement 200 comporte des moyens d'estimation 202 de la valeur de la pulsation du courant I_{P_HW} à partir des signaux de courant et le deuxième circuit électronique de traitement 201 comporte des moyens d'estimation 203 de la valeur de la pulsation de la tension U_{P_HW} à partir des signaux de tension.

Selon l'invention, l'unité logicielle de traitement 21 comporte un premier module logiciel d'estimation 210 d'une valeur de la pulsation Val1_{P_SW,} ledit module 210 étant exécuté par le microprocesseur CPU à partir des signaux de courant et de tension mis à disposition du microprocesseur pour exécuter la loi de commande LC.

L'unité électronique de traitement 20 comporte une unité électronique de comparaison 204 agencée pour comparer :
- la valeur de pulsation I_{P_HW} obtenue par le premier circuit électronique de traitement 200,
- la valeur de pulsation U_{P_HW} obtenue par le deuxième circuit électronique de traitement 201 et,
- la valeur de pulsation Val1_{P_SW} estimée par le premier module logiciel d'estimation 210.

L'unité électronique de comparaison 204 effectue la comparaison entre les trois valeurs de pulsation en tenant compte de paramètres de sécurité fonctionnelle PSF mémorisés.

L'unité électronique de comparaison 204 comporte un premier canal d'inhibition C1 du module onduleur INV du convertisseur de puissance 1. Si l'unité électronique de comparaison 204 constate des divergences importantes lors de la comparaison, celle-ci génère des signaux d'inhibition via son canal d'inhibition C1 à destination des dispositifs de commande des transistors du module onduleur INV.

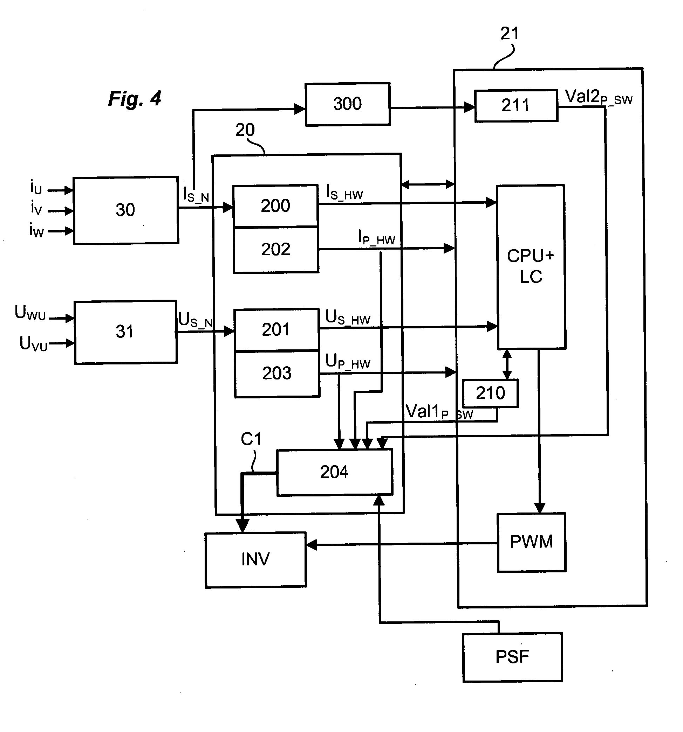

Une deuxième architecture, évolution de la première architecture, est représentée sur la figure 4. Dans cette deuxième architecture, l'unité logicielle de traitement 21 comporte un deuxième module logiciel d'estimation 211 d'une valeur de pulsation Val2_{P_SW} du courant. Ce deuxième module logiciel d'estimation 211 est exécuté en tenant compte des signaux de courant. Les signaux de courant sont reconstitués, à partir du signal numérique I_{S_N} extrait du circuit de mesure 30, par des moyens 300 électroniques ou logiciels distincts du circuit électronique de traitement 200. Ce deuxième module logiciel d'estimation s'applique au courant comme décrit précédemment ou à la tension, utilisant alors le signal numérique U_{S_N} extrait du circuit de mesure 31.

La valeur de pulsation Val2_{P_SW} estimée par le deuxième module logiciel 211 est injectée dans l'unité électronique de comparaison 204. L'unité électronique de comparaison 204 effectue ainsi une comparaison entre :
- la valeur de pulsation I_{P}__{HW} obtenue par le premier circuit électronique de traitement 200,
- la valeur de pulsation U_{P_HW} obtenue par le deuxième circuit électronique de traitement 201,
- la valeur de pulsation Val1_{P_SW} obtenue par le premier module logiciel d'estimation 210,
- la valeur de pulsation Val2_{P_SW} obtenue par le deuxième module logiciel d'estimation 211.

L'unité électronique de comparaison 204 effectue la comparaison en tenant compte des paramètres de sécurité fonctionnelle PSF mémorisés.

Comme dans la première architecture, si l'unité électronique de comparaison 204 constate des divergences importantes lors de la comparaison, celle-ci génère des signaux d'inhibition, via le premier canal d'inhibition C1, à destination des dispositifs de commande des transistors du module onduleur INV.

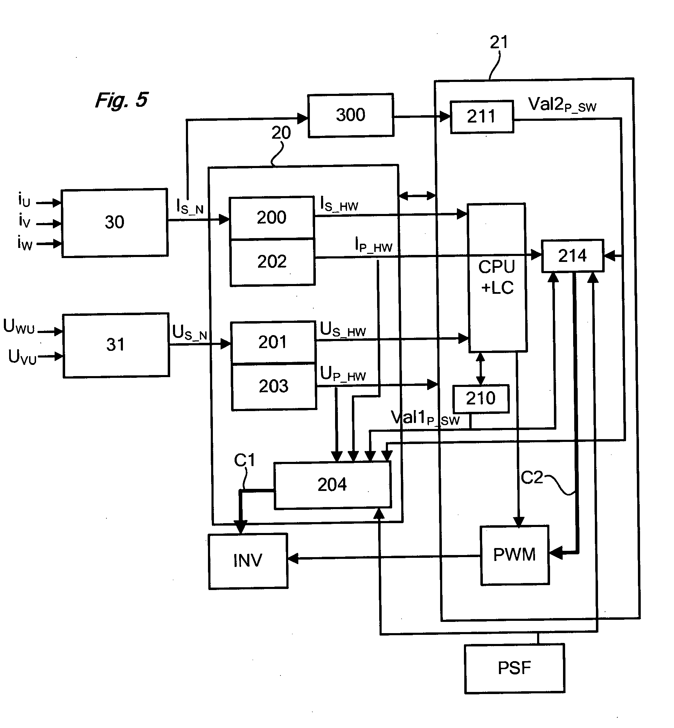

Une troisième architecture, évolution de la deuxième architecture, est représentée sur la figure 5. Dans cette troisième architecture, l'unité logicielle de traitement 21 comporte elle-même une unité logicielle de comparaison 214. Cette unité logicielle de comparaison 214 reçoit en entrée :
- la valeur de pulsation Val2_{P_SW} déterminée par le deuxième module logiciel d'estimation 211,
- la valeur de pulsation Val1_{P_SW} déterminée par le premier module logiciel d'estimation 210 et,
- la valeur de pulsation (I_{P_HW} ou U_{P_HW}) estimée par le premier ou le deuxième circuit électronique de traitement (200 ou 201).

Ainsi, dans cette architecture, deux comparaisons sont réalisées en parallèle par l'unité électronique de comparaison 204 et par l'unité logicielle de comparaison 214. De plus, les comparaisons sont effectuées d'une part par des moyens électroniques et d'autre part par des moyens logiciels.

L'unité logicielle de comparaison 214 effectue la comparaison en tenant compte des paramètres de sécurité fonctionnelle PSF mémorisés.

L'unité logicielle de comparaison 214 comporte un deuxième canal d'inhibition C2, de type logiciel, permettant d'agir sur la loi de commande LC et la génération des signaux de commande PWM pour stopper le module onduleur INV en cas de divergences importantes relevées lors de la comparaison.

Selon l'invention, comme il est aisé de déduire, par exemple par intégration, la phase du courant ou de la tension à partir de la pulsation, l'invention décrite ci-dessus peut tout à fait être mise en oeuvre en comparant des valeurs de phase et non des valeurs de pulsation. Il faut donc comprendre que le système de commande sécurisée de l'invention peut être mis en oeuvre en comparant des valeurs de phase déterminées d'une part par l'unité électronique de traitement et d'autre part par l'unité logicielle de traitement. Les trois architectures décrites ci-dessus, en liaison avec les figures 3 à 5, peuvent être mises en oeuvre de manière identique en remplaçant les valeurs de pulsation déterminées par les valeurs de phase.

## Revendications

1. Système de commande sécurisée comportant un convertisseur de puissance (1) doté d'un module onduleur (INV) destiné à être connecté à une charge électrique (C) et une unité de commande (2) destinée à déterminer des signaux de commande (PWM) à appliquer au module onduleur (INV) pour commander la charge électrique (C), l'unité de commande (2) comportant
- une unité électronique de traitement (20) qui comprend :
- un premier circuit électronique de traitement (200) agencé pour déterminer un signal de courant (I_{S_HW}) d'alimentation de la charge électrique (C),
- un deuxième circuit électronique de traitement (201) agencé pour déterminer un signal de tension (U_{S_HW}) appliqué à la charge électrique (C),
- une unité logicielle de traitement (21) recevant lesdits signaux de courant et de tension en vue de déterminer lesdits signaux de commande (PWM) de la charge électrique,
ledit système étant **caractérisé en ce que** :
- le premier circuit électronique de traitement (200) comporte des moyens d'estimation (202) d'une valeur de pulsation (I_{P_HW}) ou de phase du courant à partir du signal de courant,
- le deuxième circuit électronique de traitement (201) comporte des moyens d'estimation (203) d'une valeur de pulsation (U_{P_HW}) ou de phase de la tension à partir du signal de tension,
- l'unité logicielle de traitement (21) comporte un premier module logiciel d'estimation (210) d'une valeur de pulsation (Val1_{P_SW}) ou d'une valeur de phase,
- l'unité électronique de traitement (20) comporte une unité électronique de comparaison (204) agencée pour comparer la valeur de pulsation (I_{P_HW}) ou de phase estimée par le premier circuit électronique de traitement (200), la valeur de pulsation (U_{P_HW}) ou de phase estimée par le deuxième circuit électronique de traitement (201) et la valeur de pulsation (Val1_{P_SW}) ou de phase estimée par le premier module logiciel (210) de l'unité logicielle de traitement (21),
- l'unité électronique de comparaison (204) comporte un premier canal d'inhibition (C1) du module onduleur (INV) du convertisseur de puissance.

2. Système de commande selon la revendication 1, **caractérisé en ce que** l'unité logicielle de traitement comporte un deuxième module logiciel d'estimation d'une valeur de pulsation ou de phase du courant, tenant compte d'un signal de courant (I_{S}) et **en ce que** ladite valeur de pulsation (Val2_{P_SW}) ou de phase est injectée pour comparaison dans l'unité électronique de comparaison (204).

3. Système de commande selon la revendication 1 ou 2, **caractérisé en ce que** l'unité électronique de comparaison (204) est agencée pour effectuer une comparaison en tenant compte de paramètres de sécurité fonctionnelle (PSF) de la charge électrique (C).

4. Système de commande selon la revendication 2 ou 3, **caractérisé en ce que** l'unité logicielle de traitement (21) comporte une unité logicielle de comparaison (214) recevant en entrée la valeur de pulsation (I_{P_HW}) ou de phase estimée par le premier circuit électronique de traitement (200), la valeur de pulsation (Val1_{P_SW}) ou de phase estimée par le premier module logiciel d'estimation (210) et la valeur de pulsation (Val2_{P_SW}) ou de phase estimée par le deuxième module logiciel d'estimation (211).

5. Système de commande selon la revendication 4, **caractérisé en ce que** l'unité logicielle de comparaison (214) comporte un deuxième canal d'inhibition (C2) du module onduleur (INV) du convertisseur de puissance.

6. Système de commande selon la revendication 5, **caractérisé en ce que** l'unité logicielle de traitement est agencée pour effectuer une comparaison en tenant compte de paramètres de sécurité fonctionnelle (PSF) de la charge électrique (C).

## Patentansprüche

1. Gesichertes Steuersystem, das einen Leistungswandler (1), der mit einem Wechselrichtermodul (INV) versehen ist, das dazu bestimmt ist, mit einer elektrischen Last (C) verbunden zu werden, und eine Steuereinheit (2) aufweist, die dazu bestimmt ist, Steuersignale (PWM) festzulegen, die an das Wechselrichtermodul (INV) anzulegen sind, um die elektrische Last (C) zu steuern, wobei die Steuereinheit (2) aufweist
- eine elektronische Verarbeitungseinheit (20), die enthält:
- einen ersten elektronischen Verarbeitungsschaltkreis (200), der eingerichtet ist, um ein Stromsignal (I_{S_HW}) zur Versorgung der elektrischen Last (C) festzulegen,
- einen zweiten elektronischen Verarbeitungsschaltkreis (201), der eingerichtet ist, um ein Spannungssignal (U_{S_HW}) festzulegen, das an die elektrische Last (C) angelegt wird,
- eine Verarbeitungs-Softwareeinheit (21), die die Strom- und Spannungssignale empfängt, um die Steuersignale (PWM) der elektrischen Last festzulegen,
wobei das System **dadurch gekennzeichnet ist, dass**:
- der erste elektronische Verarbeitungsschaltkreis (200) Schätzeinrichtungen (202) eines Puls- (I_{P_HW}) oder Phasenwerts des Stroms ausgehend vom Stromsignal aufweist,
- der zweite elektronische Verarbeitungsschaltkreis (201) Schätzeinrichtungen (203) eines Puls- (U_{P_HW}) oder Phasenwerts der Spannung ausgehend vom Spannungssignal aufweist,
- die Verarbeitungs-Softwareeinheit (21) ein erstes Schätz-Softwaremodul (210) eines Pulswerts (Val1_{P_SW}) oder eines Phasenwerts aufweist,
- die elektronische Verarbeitungseinheit (20) eine elektronische Vergleichseinheit (204) aufweist, die eingerichtet ist, um den vom ersten elektronischen Verarbeitungsschaltkreis (200) geschätzten Puls- (I_{P_HW}) oder Phasenwert, den vom zweiten elektronischen Verarbeitungsschaltkreis (201) geschätzten Puls- (U_{P_HW}) oder Phasenwert und den vom ersten Softwaremodul (210) der Verarbeitungs-Softwareeinheit (21) geschätzten Puls- (Val1_{P_SW}) oder Phasenwert zu vergleichen,
- die elektronische Vergleichseinheit (204) einen ersten Sperrkanal (C1) des Wechselrichtermoduls (INV) des Leistungswandlers aufweist.

2. Steuersystem nach Anspruch 1, **dadurch gekennzeichnet, dass** die Verarbeitungs-Softwareeinheit ein zweites Schätz-Softwaremodul eines Puls- oder Phasenwerts des Stroms aufweist, das ein Stromsignal (I_{S}) berücksichtigt, und dass der Puls- (Val2_{P_SW}) oder Phasenwert zum Vergleich in die elektronische Vergleichseinheit (204) eingespeist wird.

3. Steuersystem nach Anspruch 1 oder 2, **dadurch gekennzeichnet, dass** die elektronische Vergleichseinheit (204) eingerichtet ist, um unter Berücksichtigung von funktionalen Sicherheitsparametern (PSF) der elektrischen Last (C) einen Vergleich durchzuführen.

4. Steuersystem nach Anspruch 2 oder 3, **dadurch gekennzeichnet, dass** die Verarbeitungs-Softwareeinheit (21) eine Vergleichs-Softwareeinheit (214) aufweist, die am Eingang den vom ersten elektronischen Verarbeitungsschaltkreis (200) geschätzten Puls- (I_{P_HW}) oder Phasenwert, den vom ersten Schätz-Softwaremodul (210) geschätzten Puls- (Val1_{P_SW}) oder Phasenwert und den vom zweiten Schätz-Softwaremodul (211) geschätzten Puls- (Val2_{P_SW}) oder Phasenwert empfängt.

5. Steuersystem nach Anspruch 4, **dadurch gekennzeichnet, dass** die Vergleichs-Softwareeinheit (214) einen zweiten Sperrkanal (C2) des Wechselrichtermoduls (INV) des Leistungswandlers aufweist.

6. Steuersystem nach Anspruch 5, **dadurch gekennzeichnet, dass** die Verarbeitungs-Softwareeinheit eingerichtet ist, um unter Berücksichtigung von funktionalen Sicherheitsparametern (PSF) der elektrischen Last (C) einen Vergleich durchzuführen.

## Claims

1. Secure control system comprising a power converter (1) furnished with an inverter module (INV) intended to be connected to an electrical load (C) and a control unit (2) intended to determine control signals (PWM) to be applied to the inverter module (INV) so as to control the electrical load (C), the control unit (2) comprising
- an electronic processing unit (20) which comprises:
- a first electronic processing circuit (200) designed to determine a current signal (I_{S_HW}) supplying the electrical load (C),
- a second electronic processing circuit (201) designed to determine a voltage signal (U_{S_HW}) applied to the electrical load (C),
- a software processing unit (21) receiving said current and voltage signals with a view to determining said control signals (PWM) for the electrical load,
said system being **characterized in that**:
- the first electronic processing circuit (200) comprises means for estimation (202) of a value of angular frequency (I_{P_HW}) or of phase of the current on the basis of the current signal,
- the second electronic processing circuit (201) comprises means for estimation (203) of a value of angular frequency (U_{P_HW}) or of phase of the voltage on the basis of the voltage signal,
- the software processing unit (21) comprises a first software module (210) for estimation of an angular frequency value (Val1_{P_SW}) or of a phase value,
- the electronic processing unit (20) comprises an electronic comparison unit (204) designed to compare the value of angular frequency I_{P_HW}) or of phase estimated by the first electronic processing circuit (200), the value of angular frequency (U_{P}__{HW}) or of phase estimated by the second electronic processing circuit (201) and the value of angular frequency (Val1_{P_SW}) or of phase estimated by the first software module (210) of the software processing unit (21),
- the electronic comparison unit (204) comprises a first channel for inhibition (C1) of the inverter module (INV) of the power converter.

2. Control system according to Claim 1, **characterized in that** the software processing unit comprises a second software module for estimation of a value of angular frequency or of phase of the current, taking account of a current signal (Is) and **in that** said value of angular frequency (Val2_{P_SW}) or of phase is injected for comparison into the electronic comparison unit (204).

3. Control system according to Claim 1 or 2, **characterized in that** the electronic comparison unit (204) is designed to perform a comparison while taking account of functional security parameters (PSF) of the electrical load (C).

4. Control system according to Claim 2 or 3, **characterized in that** the software processing unit (21) comprises a software comparison unit (214) receiving as input the value of angular frequency (I_{P_HW}) or of phase estimated by the first electronic processing circuit (200), the value of angular frequency (Val1_{P_SW}) or of phase estimated by the first software estimation module (210) and the value of angular frequency (Val2_{P_SW}) or of phase estimated by the second software estimation module (211).

5. Control system according to Claim 4, **characterized in that** the software comparison unit (214) comprises a second channel for inhibition (C2) of the inverter module (INV) of the power converter.

6. Control system according to Claim 5, **characterized in that** the software processing unit is designed to perform a comparison while taking account of functional security parameters (PSF) of the electrical load (C).
